# EUROPÄISCHE PATENTSCHRIFT

(11) **EP 2 899 554 B1**
(45) Veröffentlichungstag und Bekanntmachung des Hinweises auf die Patenterteilung: **14.12.2016**
(21) Anmeldenummer: 14188576.4
(22) Anmeldetag: 13.10.2014
(51) Int. Cl.: G01R 31/02, H02H 11/00, A01D 34/82

(54) **Gartenbearbeitungsmaschine mit Schaltvorrichtung gegen unbeabsichtigte Inbetriebnahme**
Garden cultivation machine with switching device preventing unintended activation
Machine de traitement du jardin avec dispositif de commutation pour éviter une mise en service involontaire

(30) Priorität: 21.11.2013 DE 102013223802
(43) Veröffentlichungstag der Anmeldung: 29.07.2015
(73) Patentinhaber: ROBERT BOSCH GMBH, 70442 Stuttgart (DE)
(72) Erfinder: Simpson, Peter, Lower Cambourne, Cambridgeshire, CB3 6EX (GB)

(56) Entgegenhaltungen:
- EP-A1- 0 661 802
- EP-A1- 1 285 570
- US-A- 5 760 499

## Beschreibung

### Stand der Technik

Aus EP 1 285 570 A1 ist ein Rasenmäher bekannt, der eine Steuereinheit aufweist, welche über ein Kabel mit einem Schalter verbunden ist, der zu einer Inbetriebnahme des Rasenmähers vorgesehen ist.

Des Weiteren ist aus US 5 760 499 A eine steuerbare Steckdose bekannt, wobei durch eine Auswertung einer Messgleichspannung mittels eines Fensterkomparators eine mit der Steckdose verbundene Last erkennbar ist.

Ferner ist aus EP 0 661 802 A1 eine Vorrichtung bekannt, die einen Fensterkomparator zur Abschaltung von Verstärkern aufweist, wenn eine am Verstärker angelegte Spannung außerhalb eines zulässigen Bereichs liegt.

### Offenbarung der Erfindung

Die Erfindung geht aus von einer Gartenbearbeitungsmaschinenschaltvorrichtung, zum Schalten einer Elektromotoreinheit einer Gartenbearbeitungsmaschine, mit zumindest einem Schalter, welcher über ein Verbindungskabel mit einer Vergleichsschaltungseinheit elektrisch verbunden ist.

Es wird vorgeschlagen, dass die Gartenbearbeitungsmaschinenschaltvorrichtung durch zumindest einen ersten elektrischen Widerstand, der gemeinsam mit dem Schalter in einem Schaltergehäuse angeordnet ist und der derart mit dem Schalter in Reihe geschaltet ist, dass er mit zumindest einem weiteren, in der Vergleichsschaltungseinheit angeordneten elektrischen Widerstand einen Spannungsteiler bildet, dessen Mittenabgriff mit dem negativen Eingang eines ersten Komparators und mit dem positiven Eingang eines zweiten Komparators elektrisch verbunden ist, um zwischen einem geschlossenen Zustand des Schalters, einem geöffneten Zustand des Schalters und einem Kurzschluss des Verbindungskabels zu unterscheiden. Unter einem "Schalter" soll in diesem Zusammenhang insbesondere ein Element verstanden werden, das zu einem Herstellen oder zu einem Unterbrechen einer elektrischen Verbindung vorgesehen ist. In einem besonders bevorzugten Ausführungsbeispiel ist der Schalter als Hebel ausgebildet. Es ist jedoch auch denkbar, dass der Schalter als Druckknopf, Drehknopf oder auf eine andere, einem Fachmann als sinnvoll erscheinende Weise ausgebildet ist. Unter "vorgesehen" soll in diesem Zusammenhang insbesondere speziell ausgestaltet, ausgestattet und/oder ausgelegt verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Kurzschluss" soll in diesem Zusammenhang insbesondere eine zumindest im Wesentlichen widerstandslose Verbindung der beiden Pole einer elektrischen Spannungsquelle verstanden werden. Unter "zumindest im Wesentlichen widerstandslos" soll in diesem Zusammenhang insbesondere verstanden werden, dass ein spezifischer Widerstandswert insbesondere weniger als 0,1 Ωmm²/ₘ, vorzugsweise weniger als 0,05 Ωmm²/ₘ und besonders bevorzugt weniger als 0,03 Ωmm²/ₘ aufweist.

Unter einem "Komparator" soll in diesem Zusammenhang insbesondere eine elektronische Schaltung verstanden werden, die zumindest teilweise dazu vorgesehen ist, zwei elektrische Spannungen zu vergleichen. Alternativ oder zusätzlich sind auch andere, einem Fachmann als sinnvoll erscheinende, insbesondere elektrische, Bauteile und/oder Schaltungen denkbar. Dadurch kann eine konstruktiv einfache und vorteilhaft kostengünstige Ausgestaltung der Vergleichsschaltungseinheit erreicht werden.

Unter "zumindest im Wesentlichen direkt" soll in diesem Zusammenhang insbesondere verstanden werden, dass eine kleinste Länge eines Leiters zur elektrischen Kopplung des zumindest einen ersten elektrischen Widerstands und des zumindest einen Schalters insbesondere weniger als 10 cm, vorzugsweise weniger als 5 cm, bevorzugt weniger als 1 cm und besonders bevorzugt weniger als 0,5 cm beträgt. Alternativ oder zusätzlich zu dem zumindest einen ersten elektrischen Widerstand können auch eine Induktionsspule und/oder andere, einem Fachmann als sinnvoll erscheinende, insbesondere elektrische, Bauteile und/oder Schaltungen vorgesehen sein. Dadurch kann eine vorteilhaft kompakte und bevorzugt zuverlässige Ausgestaltung der Gartenbearbeitungsmaschinenschaltvorrichtung erreicht werden.

Insbesondere bei einer Ausgestaltung einer Gartenbearbeitungsmaschine, beispielsweise eines Rasenmähers, ohne eine Vergleichsschaltungseinheit kann ein Kurzschluss, insbesondere in einem Verbindungskabel, das den Schalter mit einer Motorsteuerung einer Antriebseinheit der Gartenbearbeitungsmaschine verbindet, zu einer Überspannung und dadurch zu einem Störsignal innerhalb der Motorsteuerung und zu einer selbsttätigen und nicht durch einen Bediener bedingten Aktivierung der Antriebseinheit führen. Dieses hohe Verletzungsrisiko für einen Bediener der Gartenbearbeitungsmaschine kann vorteilhafterweise durch die Vergleichsschaltungseinheit der erfindungsgemäßen Gartenbearbeitungsmaschinenschaltvorrichtung verhindert werden.

Durch die erfindungsgemäße Ausgestaltung der Gartenbearbeitungsmaschinenschaltvorrichtung kann ein Starten der Elektromotoreinheit aufgrund eines Kurzschlusses durch einen Defekt der Gartenbearbeitungsmaschinenschaltvorrichtung vorteilhaft sicher verhindert und somit eine bevorzugt hohe Bediensicherheit erreicht werden.

Des Weiteren wird vorgeschlagen, dass der zumindest eine Schalter innerhalb eines Schaltergehäuses angeordnet ist, das zumindest teilweise von einer Motorgehäuseeinheit und/oder von einer Getriebegehäuseeinheit, in der die Vergleichsschaltungseinheit angeordnet ist, getrennt und beabstandet ausgebildet ist. Unter "getrennt" soll in diesem Zusammenhang insbesondere verstanden werden, dass das Schaltergehäuse und die Motorgehäuseeinheit und/oder die Getriebegehäuseeinheit keine funktionell wesentlichen gemeinsamen Bauteile aufweisen. Unter "beabstandet" soll in diesem Zusammenhang insbesondere verstanden werden, dass das Schaltergehäuse und die Motorgehäuseeinheit und/oder die Getriebegehäuseeinheit einen kleinsten Abstand aufweisen, der insbesondere zumindest 5 cm, vorzugsweise zumindest 10 cm, bevorzugt zumindest 50 cm und besonders bevorzugt zumindest 100 cm beträgt. Dadurch kann eine konstruktiv einfache und vorteilhaft bedienfreundliche Ausgestaltung der Gartenbearbeitungsmaschinenschaltvorrichtung erreicht werden.

Des Weiteren wird vorgeschlagen, dass der zumindest eine Schalter über zumindest ein Verbindungskabel mit der Vergleichsschaltungseinheit elektrisch verbunden ausgebildet ist. Dadurch kann eine konstruktiv einfache und bevorzugt bedienfreundliche Ausgestaltung der Gartenbearbeitungsmaschinenschaltvorrichtung erreicht werden.

Alternativ oder zusätzlich zu dem zumindest einen ersten elektrischen Widerstand können auch eine Induktionsspule und/oder andere, einem Fachmann als sinnvoll erscheinende, insbesondere elektrische, Bauteile und/oder Schaltungen vorgesehen sein. Dadurch kann eine vorteilhaft kompakte und bevorzugt zuverlässige Ausgestaltung der Gartenbearbeitungsmaschinenschaltvorrichtung erreicht werden.

Zudem wird vorgeschlagen, dass die Vergleichsschaltungseinheit zumindest einen weiteren elektrischen Widerstand umfasst. Vorzugsweise ist der zumindest eine elektrische Widerstand zumindest einem der zumindest zwei Komparatoren vorgeschaltet. Dadurch kann auf konstruktiv einfache Weise eine vorteilhaft präzise Unterscheidung zwischen einem geschlossenen Zustand des Schalters und einem Kurzschluss durch die Vergleichsschaltungseinheit erreicht werden.

Des Weiteren wird vorgeschlagen, dass der zumindest eine erste elektrische Widerstand und der zumindest eine weitere elektrische Widerstand einen zumindest im Wesentlichen gleichen Widerstandswert aufweisen. Unter "zumindest im Wesentlichen gleich" soll in diesem Zusammenhang insbesondere verstanden werden, dass der größere Widerstandswert insbesondere um höchstens 10 %, vorzugsweise um höchstens 5 %, bevorzugt um höchstens 3 % und besonders bevorzugt um höchstens 1 % des niedrigeren Widerstandswerts von dem niedrigeren Widerstandswert abweicht. Dadurch kann eine vorteilhaft kostengünstige Ausgestaltung der Gartenbearbeitungsmaschinenschaltvorrichtung erreicht werden.

Ferner wird vorgeschlagen, dass der erste Komparator der Vergleichsschaltungseinheit dazu vorgesehen ist, bei einem Kurzschluss durchzuschalten. Unter "durchschalten" soll in diesem Zusammenhang insbesondere verstanden werden, dass der zumindest eine Komparator in dem zumindest einen Zustand in einer Richtung, in der eine elektrische Leitfähigkeit insbesondere veränderbar ausgebildet ist, die elektrische Leitfähigkeit aufweist und den elektrischen Strom, insbesondere von einem Ausgangsanschluss zu einer Masseleitung, leitet. Dadurch kann die Ausgabe eines Motorsteuersignals und somit ein unerwünschtes Starten der Elektromotoreinheit auf bevorzugt einfache Weise verhindert werden.

Des Weiteren wird vorgeschlagen, dass der weitere Komparator der Vergleichsschaltungseinheit dazu vorgesehen ist, in einem geöffneten Zustand des Schalters und/oder bei einer Unterbrechung einer Verbindung durchzuschalten. Unter "durchschalten" soll in diesem Zusammenhang insbesondere verstanden werden, dass der zumindest eine Komparator in dem zumindest einen Zustand in die Richtung, in der eine elektrische Leitfähigkeit insbesondere veränderbar ausgebildet ist, die elektrische Leitfähigkeit aufweist und den elektrischen Strom, insbesondere von einem Ausgangsanschluss zu einer Masseleitung, leitet. Dadurch kann die Ausgabe eines Motorsteuersignals und somit ein unerwünschtes Starten der Elektromotoreinheit auf bevorzugt einfache Weise verhindert werden.

Ferner wird vorgeschlagen, dass der erste Komparator und der weitere Komparator der Vergleichsschaltungseinheit dazu vorgesehen sind, in einem geschlossenen Zustand des Schalters zu sperren. Unter "sperren" soll in diesem Zusammenhang insbesondere verstanden werden, dass der zumindest eine Komparator in dem zumindest einen Zustand in der Richtung, in der die elektrische Leitfähigkeit insbesondere veränderbar ausgebildet ist, elektrisch isolierend ausgebildet ist und den elektrischen Strom, insbesondere von einem Ausgangsanschluss zu einer Masseleitung, nicht leitet. Dadurch kann die Ausgabe eines Motorsteuersignals und somit ein bedienungsgemäßes und erwünschtes Starten der Elektromotoreinheit durch einen Bediener auf bevorzugt einfache Weise erreicht werden.

Zudem wird vorgeschlagen, dass der zumindest eine Schalter zumindest teilweise mechanisch und von einem Bediener betätigbar ausgebildet ist. Dadurch kann eine vorteilhaft einfache Ausgestaltung der Gartenbearbeitungsmaschinenschaltvorrichtung erreicht werden.

Ferner wird vorgeschlagen, dass der zumindest eine Schalter als Mikroschalter ausgebildet ist. Dadurch kann eine vorteilhaft kompakte Ausgestaltung des Schalters erreicht werden.

Zudem wird eine Gartenbearbeitungsmaschine, insbesondere ein Rasenmäher, mit zumindest einer erfindungsgemäßen Gartenbearbeitungsmaschinenschaltvorrichtung vorgeschlagen. Dadurch kann eine vorteilhaft hohe Bedienersicherheit der Gartenbearbeitungsmaschine erreicht werden.

Die erfindungsgemäße Gartenbearbeitungsmaschinenschaltvorrichtung sowie das erfindungsgemäße System sollen hierbei nicht auf die oben beschriebene Anwendung und Ausführungsform beschränkt sein. Insbesondere können die erfindungsgemäße Gartenbearbeitungsmaschinenschaltvorrichtung sowie das erfindungsgemäße System zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Gartenbearbeitungsmaschine mit einer erfindungsgemäßen Gartenbearbeitungsmaschinenschaltvorrichtung in einer perspektivischen Darstellung,
- Fig. 2: ein Schaltbild der erfindungsgemäßen Gartenbearbeitungsmaschinenschaltvorrichtung in einem geschlossenen Zustand eines Schalters,
- Fig. 3: ein Schaltbild der erfindungsgemäßen Gartenbearbeitungsmaschinenschaltvorrichtung in einem geöffneten Zustand des Schalters und
- Fig. 4: ein Schaltbild der erfindungsgemäßen Gartenbearbeitungsmaschinenschaltvorrichtung in einem Kurzschlusszustand.

### Beschreibung des Ausführungsbeispiels

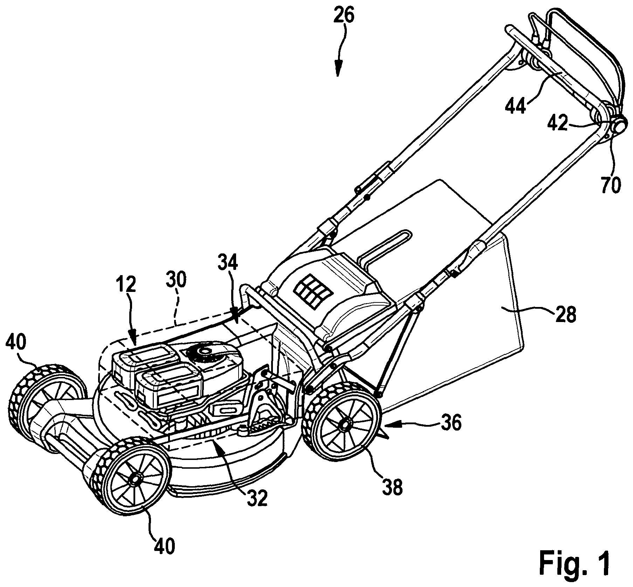

Figur 1 zeigt eine Gartenbearbeitungsmaschine 26, die als Rasenmäher ausgebildet ist. Die Gartenbearbeitungsmaschine 26 ist hierbei als elektrisch betreibbarer Rasenmäher ausgebildet, der von einem Bediener vor sich her bewegbar ist. Somit ist die Gartenbearbeitungsmaschine 26 als sogenannter Schieberasenmäher ausgebildet. Es ist jedoch auch denkbar, dass die Gartenbearbeitungsmaschine 26 als Motorsense oder als eine andere, einem Fachmann als sinnvoll erscheinende Bearbeitungsmaschine ausgebildet ist. Die Gartenbearbeitungsmaschine 26 umfasst zumindest eine Auffangvorrichtung 28 zu einem Auffangen und/oder Sammeln von abgetragenem Grünschnitt, insbesondere von Gras. Somit ist die Auffangvorrichtung 28 als Grasauffangvorrichtung ausgebildet.

Ferner umfasst die Gartenbearbeitungsmaschine 26 zumindest eine Motorgehäuseeinheit 30 zu einer Aufnahme und zu einer Lagerung zumindest einer Elektromotoreinheit 12 der Gartenbearbeitungsmaschine 26. Ferner umfasst die Gartenbearbeitungsmaschine 26 zumindest eine, einem Fachmann bereits bekannte Mähwerkeinheit 32 zu einer Bearbeitung einer Arbeitsfläche, insbesondere einer Grünfläche. Die Mähwerkeinheit 32 ist dazu vorgesehen, auf der Arbeitsfläche wachsendes Gras zu mähen. Hierzu ist die Mähwerkeinheit 32 von der Elektromotoreinheit 12 antreibbar. Die Mähwerkeinheit 48 kann hierbei direkt von der Elektromotoreinheit 12 antreibbar ausgebildet sein oder die Gartenbearbeitungsmaschine 26 umfasst zumindest eine Getriebeeinheit (hier nicht näher dargestellt), die mit der Elektromotoreinheit 12 und der Mähwerkeinheit 32 zusammenwirkt, insbesondere antriebstechnisch mit der Elektromotoreinheit 12 und der Mähwerkeinheit 32 verbunden ist. Die Getriebeeinheit kann in einer separaten Getriebegehäuseeinheit (hier nicht näher dargestellt) der Gartenbearbeitungsmaschine 26 oder in der Motorgehäuseeinheit 30 angeordnet sein.

Die Gartenbearbeitungsmaschine 26 umfasst ferner eine Abtragabtransporteinheit 34, die einen Schneidraum umfasst, in dem ein, einem Fachmann bereits bekanntes Mähwerkzeug (hier nicht näher dargestellt) der Mähwerkeinheit 32 zu einem Schneiden von Gras antreibbar angeordnet ist. Die Mähwerkeinheit 32 ist somit im Schneidraum der Abtragabtransporteinheit 34 angeordnet. Der Schneidraum ist direkt angrenzend an eine nicht näher dargestellte Grasauswurföffnung der Abtragabtransporteinheit 34 angeordnet.

Zu einer Bewegung der Gartenbearbeitungsmaschine 26 auf einer Arbeitsfläche, insbesondere einer Grünfläche, weist die Gartenbearbeitungsmaschine 26 zumindest eine Fahrwerkseinheit 36 auf. Die Fahrwerkseinheit 36 umfasst hierbei zumindest zwei Antriebsräder 38, wobei in Figur 1 lediglich eines der zwei Antriebsräder 38 dargestellt ist. Die Antriebsräder 38 sind mittels der Elektromotoreinheit 12 auf eine, einem Fachmann bereits bekannte Art und Weise antreibbar. Es ist jedoch auch denkbar, dass die Gartenbearbeitungsmaschine 12 zusätzlich zur Elektromotoreinheit 46, mittels welcher die Mähwerkeinheit 32 antreibbar ist, eine zusätzliche Elektromotoreinheit umfasst, mittels welcher die Antriebsräder 38 antreibbar sind. Zudem ist es denkbar, dass die Gartenbearbeitungsmaschine 26 eine Antriebsgetriebeeinheit (hier nicht näher dargestellt) umfasst, mittels welcher eine Antriebsdrehzahl und/oder ein Antriebsdrehmoment der Antriebsräder 38 einstellbar sind/ist. Zudem ist eine Antriebswirkung der Antriebsräder 38 auf eine, einem Fachmann bereits bekannte Art und Weise zu- und/oder abschaltbar. Ferner umfasst die Fahrwerkseinheit 36 zumindest ein unangetriebenes Rotationsrad 40, insbesondere zumindest zwei unangetriebene Rotationsräder 40. Es ist jedoch auch denkbar, dass das Rotationsrad 40, insbesondere die Rotationsräder 40, ebenfalls mittels der Elektromotoreinheit 12 antreibbar ausgebildet ist.

Zu einer Betätigung der Elektromotoreinheit 12 weist die Gartenbearbeitungsmaschine 26 ein als Schaltbügel ausgebildetes Schaltelement 42 auf, das an einem Handgriff 44 der Gartenbearbeitungsmaschine 26 angeordnet ist. Das Schaltelement 42 kann von einem Bediener der Gartenbearbeitungsmaschine 26 mechanisch betätigt werden.

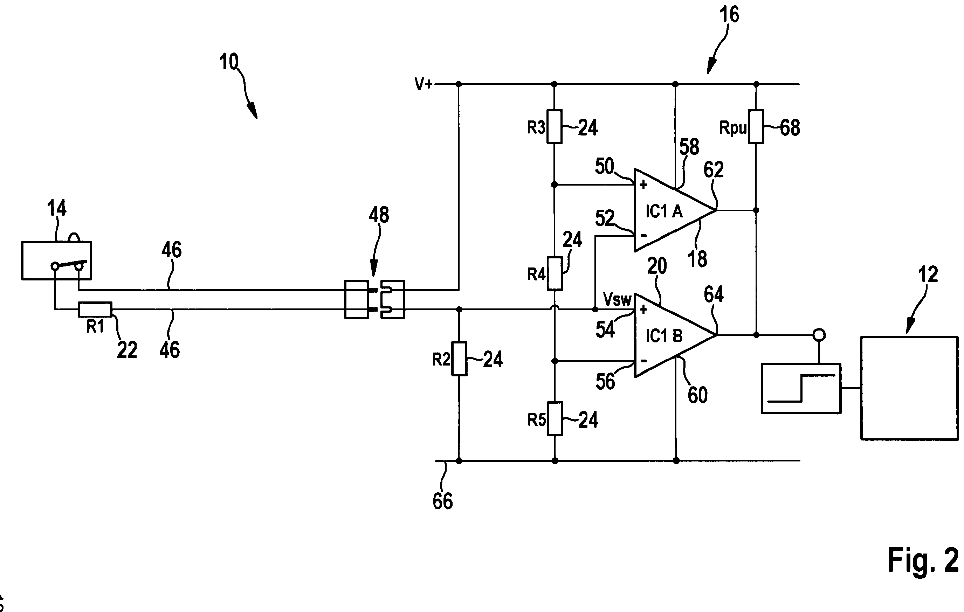

In Figur 2 ist ein Schaltbild einer Gartenbearbeitungsmaschinenschaltvorrichtung 10 der Gartenbearbeitungsmaschine 26 dargestellt, die dazu vorgesehen ist, die Elektromotoreinheit 12 elektrisch zu schalten. Die Gartenbearbeitungsmaschinenschaltvorrichtung 10 ist teilweise innerhalb der Motorgehäuseeinheit 30 oder der Getriebegehäuseeinheit der Gartenbearbeitungsmaschine 26 angeordnet und in Figur 1 nicht dargestellt. Die Gartenbearbeitungsmaschinenschaltvorrichtung 10 ist über eine Motorsteuerung mit der Elektromotoreinheit 12 verbunden. Die Motorsteuerung umfasst eine Platine bzw. Leiterplatte. Es ist jedoch auch denkbar, dass die Gartenbearbeitungsmaschinenschaltvorrichtung 10 direkt mit der Elektromotoreinheit 12 gekoppelt ist. Die Gartenbearbeitungsmaschinenschaltvorrichtung 10 umfasst einen Schalter 14, der über das als Schaltbügel ausgebildete Schaltelement 42 am Handgriff 44 der Gartenbearbeitungsmaschine 26 von einem Bediener der Gartenbearbeitungsmaschine 26 mechanisch betätigbar ist. Der Schalter 14 ist somit mechanisch und von einem Bediener betätigbar ausgebildet. Der Schalter 14 der Gartenbearbeitungsmaschinenschaltvorrichtung 10 ist als Mikroschalter ausgebildet.

Die Gartenbearbeitungsmaschinenschaltvorrichtung 10 umfasst ferner eine Vergleichsschaltungseinheit 16, die dazu vorgesehen ist, zwischen einem geschlossenen Zustand des Schalters 14, einem Kurzschluss zwischen dem Schalter 14 und der Vergleichsschaltungseinheit 16 und einem geöffneten Zustand des Schalters 14 zu unterscheiden. Der Schalter 14 und die Vergleichsschaltungseinheit 16 sind elektrisch miteinander verbunden. Der Schalter 14 und die Vergleichsschaltungseinheit 16 sind über ein Verbindungskabel 46 miteinander verbunden. Der Schalter 14 und die Vergleichsschaltungseinheit 16 sind räumlich beabstandet angeordnet. Die Vergleichsschaltungseinheit 16 ist innerhalb der Motorgehäuseeinheit 30 oder der Getriebegehäuseeinheit der Gartenbearbeitungsmaschine 26 angeordnet. Der Schalter 14 ist an dem Handgriff 44 der Gartenbearbeitungsmaschine 26 angeordnet. Der Schalter 14 ist von der Vergleichsschaltungseinheit 16 beabstandet angeordnet. Der Schalter 14 ist über das Verbindungskabel 46 mit der Vergleichsschaltungseinheit 16 elektrisch verbunden ausgebildet. Der Schalter 14 ist innerhalb eines Schaltergehäuses 70 angeordnet, das von einer Motorgehäuseeinheit 30 und/oder von einer Getriebegehäuseeinheit, in der die Vergleichsschaltungseinheit 16 angeordnet ist, getrennt und beabstandet ausgebildet ist. Das Verbindungskabel 46 ist in einem montierten Zustand entlang des Handgriffs 44 der Gartenbearbeitungsmaschine 26 geführt. Das Verbindungskabel 46 und die Vergleichsschaltungseinheit 16 bilden einen durch den Schalter 14 unterbrechbaren und schließbaren Schaltkreis. Zwischen dem Schalter 14 und der Vergleichsschaltungseinheit 16 ist zudem ein Steckerelement 48 zur elektrischen Kopplung vorgesehen. Die Gartenbearbeitungsmaschinenschaltvorrichtung 10 umfasst ferner zumindest einen ersten elektrischen Widerstand 22, der dem Schalter zumindest im Wesentlichen direkt nachgeschaltet ist. Der erste elektrische Widerstand 22 ist dem Schalter 14 direkt nachgeschaltet angeordnet. Der erste elektrische Widerstand 22 ist innerhalb des Schaltergehäuses 70 angeordnet. Die Vergleichsschaltungseinheit 16 umfasst zudem zumindest einen weiteren elektrischen Widerstand 24. Die Vergleichsschaltungseinheit 16 umfasst mehrere weitere elektrische Widerstände 24. Die Vergleichsschaltungseinheit 16 weist insgesamt vier weitere elektrische Widerstände 24 auf. Der erste elektrische Widerstand 22 und ein weiterer elektrischer Widerstand 24 weisen einen zumindest im Wesentlichen gleichen Widerstandswert auf. Der erste elektrische Widerstand 22 und die weiteren elektrischen Widerstände 24 weisen denselben Widerstandswert auf.

Die Vergleichsschaltungseinheit 16 umfasst zumindest zwei Komparatoren 18, 20. Die Vergleichsschaltungseinheit 16 weist einen ersten Komparator 18 und einen weiteren Komparator 20 auf. Die Komparatoren 18, 20 sind dazu vorgesehen, jeweils zwei anliegende Spannungswerte zu vergleichen. Die Komparatoren 18, 20 sind als analoge Komparatoren ausgebildet. Der erste Komparator 18 der Vergleichsschaltungseinheit 16 ist dazu vorgesehen, bei einem Kurzschluss zwischen dem Schalter 14 und der Vergleichsschaltungseinheit 16 durchzuschalten. Der weitere Komparator 20 der Vergleichsschaltungseinheit 16 ist dazu vorgesehen, in einem geöffneten Zustand des Schalters 14 und/oder bei einer Unterbrechung einer Verbindung zwischen dem Schalter 14 und der Vergleichsschaltungseinheit 16 durchzuschalten. Der erste Komparator 18 und der weitere Komparator 20 der Vergleichsschaltungseinheit 16 sind jeweils dazu vorgesehen, in einem geschlossenen Zustand des Schalters 14 zu sperren. Die weiteren elektrischen Widerstände 24 sind den Komparatoren 18, 20 vorgeschaltet. Die Komparatoren 18, 20 weisen jeweils einen positiven elektrischen Anschluss 50, 54, einen negativen elektrischen Anschluss 52, 56 und einen Versorgungsspannungsanschluss 58, 60 auf. Ferner weisen die Komparatoren 18, 20 jeweils einen Ausgangsanschluss 62, 64 auf.

In einem Betriebszustand der Gartenbearbeitungsmaschinenschaltvorrichtung 10 liegen an dem positiven elektrischen Anschluss 50 des ersten Komparators 18 ²/₃ des Werts der Versorgungsspannung der Gartenbearbeitungsmaschinenschaltvorrichtung 10 an. In einem Betriebszustand der Gartenbearbeitungsmaschinenschaltvorrichtung 10 liegen an dem negativen elektrischen Anschluss 56 des weiteren Komparators 20 ⅓ des Werts der Versorgungsspannung der Gartenbearbeitungsmaschinenschaltvorrichtung 10 an. An dem negativen elektrischen Anschluss 52 des ersten Komparators 18 und an dem positiven elektrischen Anschluss 54 des weiteren Komparators 20 liegt jeweils ein gleicher Spannungswert an. An dem Versorgungsspannungsanschluss 58 des ersten Komparators 18 liegt die volle Versorgungsspannung an. Der Versorgungsspannungsanschluss 60 des weiteren Komparators 20 ist mit einer Masseleitung 66 der Gartenbearbeitungsmaschinenschaltvorrichtung 10 verbunden. Der erste Komparator 18 und der weitere Komparator 20 sind elektrisch verbunden. Der erste Komparator 18 und der weitere Komparator 20 weisen jeweils einen Thyristor auf. Der erste Komparator 18 und der weitere Komparator 20 vergleichen jeweils die anliegenden Spannungswerte des positiven elektrischen Anschlusses 50, 54 und des negativen elektrischen Anschlusses 52, 56.

In Figur 2 ist das Schaltbild der Gartenbearbeitungsmaschinenschaltvorrichtung 10 in einem geschlossenen Zustand des Schalters 14 dargestellt. In dem geschlossenen Zustand des Schalters 14 fließt der elektrische Strom von einer Versorgungsspannungsquelle über das Steckerelement 48 durch den geschlossenen Schalter 14 und den ersten elektrischen Widerstand 22 und anschließend wieder über das Steckerelement 48 zu dem negativen elektrischen Anschluss 52 des ersten Komparators 18 und an dem positiven elektrischen Anschluss 54 des weiteren Komparators 20. An dem negativen elektrischen Anschluss 52 des ersten Komparators 18 und an dem positiven elektrischen Anschluss 54 des weiteren Komparators 20 liegt in dem geschlossenen Zustand des Schalters 14 somit jeweils die Hälfte des Werts der Versorgungsspannung der Gartenbearbeitungsmaschinenschaltvorrichtung 10 an. Der erste Komparator 18 vergleicht die anliegenden Spannungswerte des positiven elektrischen Anschlusses 50 und des negativen elektrischen Anschlusses 52. Der anliegende Spannungswert des positiven elektrischen Anschlusses 50 des ersten Komparators 18 ist höher als der anliegende Spannungswert des negativen elektrischen Anschlusses 52. Der weitere Komparator 20 vergleicht die anliegenden Spannungswerte des positiven elektrischen Anschlusses 54 und des negativen elektrischen Anschlusses 56. Der anliegende Spannungswert des positiven elektrischen Anschlusses 54 des weiteren Komparators 20 ist höher als der anliegende Spannungswert des negativen elektrischen Anschlusses 56. Aufgrund dessen sperrt der Thyristor des ersten Komparators 18 und der elektrische Strom von einer Versorgungsspannungsquelle fließt über einen elektrischen Außenwiderstand 68 und erzeugt ein Motorsteuerungssignal, das zu einem Starten der Elektromotoreinheit 12 vorgesehen ist. Der elektrische Außenwiderstand 68 weist einen anderen Widerstandswert auf als der erste elektrische Widerstand 22 und die weiteren elektrischen Widerstände 24.

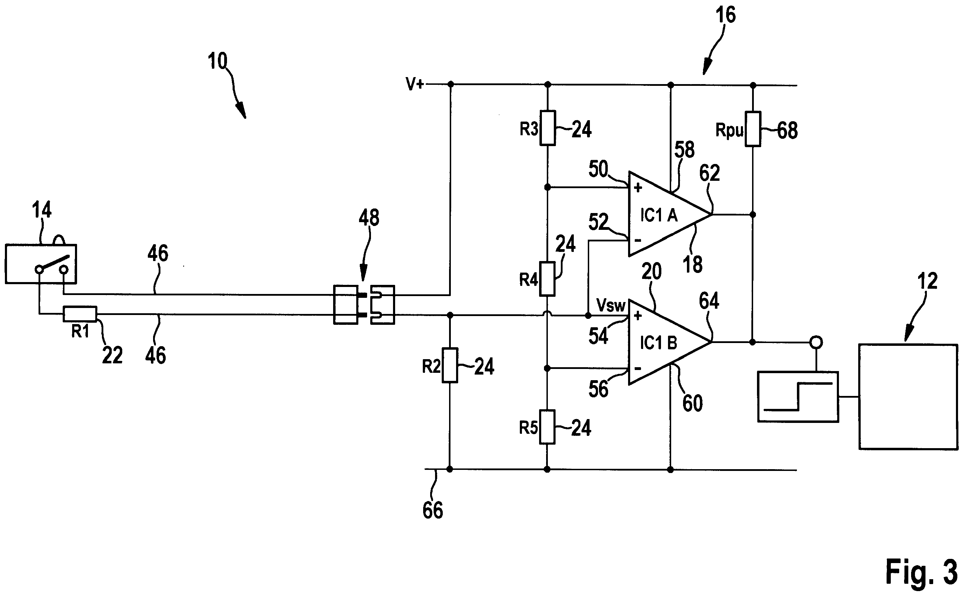

In Figur 3 ist das Schaltbild der Gartenbearbeitungsmaschinenschaltvorrichtung 10 in einem geöffneten Zustand des Schalters 14 dargestellt. In dem geöffneten Zustand des Schalters 14 fließt der elektrische Strom von einer Versorgungsspannungsquelle über das Steckerelement 48 lediglich bis zu dem geöffneten Schalter 14. An dem negativen elektrischen Anschluss 52 des ersten Komparators 18 und an dem positiven elektrischen Anschluss 54 des weiteren Komparators 20 liegt in dem geöffneten Zustand des Schalters 14 somit jeweils zumindest nahezu keine Spannung an. Der erste Komparator 18 vergleicht die anliegenden Spannungswerte des positiven elektrischen Anschlusses 50 und des negativen elektrischen Anschlusses 52. Der anliegende Spannungswert des positiven elektrischen Anschlusses 50 des ersten Komparators 18 ist höher als der anliegende Spannungswert des negativen elektrischen Anschlusses 52. Aufgrund dessen sperrt der Thyristor des ersten Komparators 18. Der anliegende Spannungswert des positiven elektrischen Anschlusses 54 des weiteren Komparators 20 ist niedriger als der anliegende Spannungswert des negativen elektrischen Anschlusses 56. Aufgrund dessen schaltet der Thyristor des weiteren Komparators 20 und der elektrische Strom von einer Versorgungsspannungsquelle fließt über den weiteren Komparator 20 und die Massenleitung 66 ab. Somit wird kein Motorsteuerungssignal, das zu einem Starten der Elektromotoreinheit 12 vorgesehen ist, erzeugt.

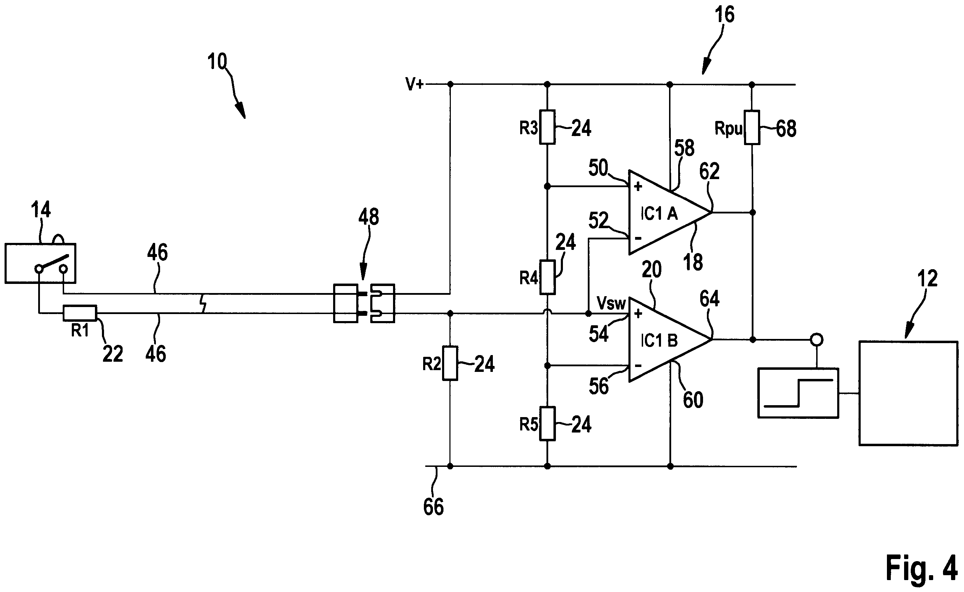

In Figur 4 ist das Schaltbild der Gartenbearbeitungsmaschinenschaltvorrichtung 10 mit einem Kurzschluss dargestellt. In diesem Kurzschlusszustand fließt der elektrische Strom von einer Versorgungsspannungsquelle über das Steckerelement 48 bis zu dem Kurzschluss, wieder zu dem Steckerelement 48 zurück und anschließend zu dem negativen elektrischen Anschluss 52 des ersten Komparators 18 und zu dem positiven elektrischen Anschluss 54 des weiteren Komparators 20. An dem negativen elektrischen Anschluss 52 des ersten Komparators 18 und an dem positiven elektrischen Anschluss 54 des weiteren Komparators 20 liegt in dem Kurzschlusszustand somit jeweils die volle Versorgungsspannung an. Der erste Komparator 18 vergleicht die anliegenden Spannungswerte des positiven elektrischen Anschlusses 50 und des negativen elektrischen Anschlusses 52. Der anliegende Spannungswert des positiven elektrischen Anschlusses 50 des ersten Komparators 18 ist niedriger als der anliegende Spannungswert des negativen elektrischen Anschlusses 52. Aufgrund dessen schaltet der Thyristor des ersten Komparators 18 und der elektrische Strom von einer Versorgungsspannungsquelle fließt über den ersten Komparator 18 und die Massenleitung 66 ab. Somit wird kein Motorsteuerungssignal, das zu einem Starten der Elektromotoreinheit 12 vorgesehen ist, erzeugt. Der anliegende Spannungswert des positiven elektrischen Anschlusses 54 des weiteren Komparators 20 ist höher als der anliegende Spannungswert des negativen elektrischen Anschlusses 56. Aufgrund dessen sperrt der Thyristor des weiteren Komparators 20.

## Patentansprüche

1. Gartenbearbeitungsmaschinenschaltvorrichtung (10), zum Schalten einer Elektromotoreinheit (12) einer Gartenbearbeitungsmaschine (26), mit zumindest einem Schalter (14), welcher über ein Verbindungskabel (46) mit einer Vergleichsschaltungseinheit (16) elektrisch verbunden ist, **gekennzeichnet durch** zumindest einen ersten elektrischen Widerstand (R1, 22), der gemeinsam mit dem Schalter (14) in einem Schaltergehäuse (70) angeordnet ist und der derart mit dem Schalter (14) in Reihe geschaltet ist, dass er mit zumindest einem weiteren, in der Vergleichsschaltungseinheit (16) angeordneten elektrischen Widerstand (R2, 24) einen Spannungsteiler bildet, dessen Mittenabgriff mit dem negativen Eingang eines ersten Komparators (18) und mit dem positiven Eingang eines zweiten Komparators (20) elektrisch verbunden ist, um zwischen einem geschlossenen Zustand des Schalters (14), einem geöffneten Zustand des Schalters (14) und einem Kurzschluss des Verbindungskabels (46) zu unterscheiden.

2. Gartenbearbeitungsmaschinenschaltvorrichtung (10) nach Anspruch 1, **gekennzeichnet durch** zwei weitere Spannungsteiler (R3, R4+R5; R3+R4, R5), welche jeweils mit dem positiven Eingang des ersten Komparators (18) und dem negativen Eingang des zweiten Komparators (20) verbunden sind.

3. Gartenbearbeitungsmaschinenschaltvorrichtung nach Anspruch 2, **dadurch gekennzeichnet, dass** die Widerstände (R1 bis R5) alle im Wesentlichen den gleichen Widerstandswert aufweisen.

4. Gartenbearbeitungsmaschinenschaltvorrichtung (10) nach einem der vorhergehenden Ansprüche, **dadurch gekennzeichnet, dass** bei geschlossenem Schalter (14) das Potential an den positiven Eingängen des ersten und des zweiten Komparators (18, 20) größer ist, als an ihren negativen Eingängen.

5. Gartenbearbeitungsmaschinenschaltvorrichtung (10) nach einem der vorhergehenden Ansprüche, **dadurch gekennzeichnet, dass** bei geöffnetem Schalter (14) das Potential am positiven Eingang des ersten Komparators (18) größer ist, als am negativen Eingang, und das Potential am positiven Eingang des zweiten Komparators (20) kleiner ist, als am negativen Eingang.

6. Gartenbearbeitungsmaschinenschaltvorrichtung (10) nach einem der vorhergehenden Ansprüche, **dadurch gekennzeichnet, dass** bei einem Kurzschluss des Verbindungskabels (46) das Potential am positiven Eingang des ersten Komparators (18) kleiner ist, als am negativen Eingang, und das Potential am positiven Eingang des zweiten Komparators (20) größer ist, als am negativen Eingang.

7. Gartenbearbeitungsmaschinenschaltvorrichtung nach einem der vorhergehenden Ansprüche, **dadurch gekennzeichnet, dass** der erste Komparator (18) der Vergleichsschaltungseinheit (16) dazu vorgesehen ist, bei einem Kurzschluss durchzuschalten.

8. Gartenbearbeitungsmaschinenschaltvorrichtung nach einem der vorhergehenden Ansprüche, **dadurch gekennzeichnet, dass** der weitere Komparator (20) der Vergleichsschaltungseinheit (16) dazu vorgesehen ist, in einem geöffneten Zustand des Schalters (14) und/oder bei einer Unterbrechung einer Verbindung durchzuschalten.

9. Gartenbearbeitungsmaschinenschaltvorrichtung nach einem der vorhergehenden Ansprüche, **dadurch gekennzeichnet, dass** der erste Komparator (18) und der weitere Komparator (20) der Vergleichsschaltungseinheit (16) dazu vorgesehen sind, in einem geschlossenen Zustand des Schalters (14) zu sperren.

10. Gartenbearbeitungsmaschinenschaltvorrichtung nach einem der vorhergehenden Ansprüche, **dadurch gekennzeichnet, dass** der zumindest eine Schalter (14) zumindest teilweise mechanisch und von einem Bediener betätigbar ausgebildet ist.

11. Gartenbearbeitungsmaschinenschaltvorrichtung nach Anspruch 10, **dadurch gekennzeichnet, dass** der zumindest eine Schalter (14) als Mikroschalter ausgebildet ist.

12. Gartenbearbeitungsmaschine, insbesondere Rasenmäher, mit zumindest einer Gartenbearbeitungsmaschinenschaltvorrichtung (10) nach einem der vorhergehenden Ansprüche.

## Claims

1. Gardening machine switching apparatus (10) for switching an electric motor unit (12) of a gardening machine (26), comprising at least one switch (14) which is electrically connected to a comparison circuit unit (16) by means of a connecting cable (46), **characterized by** at least one first electrical resistor (R1, 22) which is arranged, together with the switch (14), in a switch housing (70) and which is connected in series with the switch (14) in such a way that it forms a voltage divider with at least one further electrical resistor (R2, 24) which is arranged in the comparison circuit unit (16), the centre tap of the said voltage divider being electrically connected to the negative input of a first comparator (18) and to the positive input of a second comparator (20) in order to distinguish between a closed state of the switch (14), an open state of the switch (14) and a short circuit of the connecting cable (46).

2. Gardening machine switching apparatus (10) according to Claim 1, **characterized by** two further voltage dividers (R3, R4+R5; R3+R4, R5) which are respectively connected to the positive input of the first comparator (18) and to the negative- input of the second comparator (20).

3. Gardening machine switching apparatus according to Claim 2, **characterized in that** the resistors (R1 to R5) all have substantially the same resistance value.

4. Gardening machine switching apparatus (10) according to one of the preceding claims, **characterized in that**, when the switch (14) is closed, the potential at the positive inputs of the first and of the second comparator (18, 20) is greater than at the negative inputs of the said comparators.

5. Gardening machine switching apparatus (10) according to one of the preceding claims, **characterized in that**, when the switch (14) is open, the potential at the positive input of the first comparator (18) is greater than at the negative input and the potential at the positive input of the second comparator (20) is less than at the negative input.

6. Gardening machine switching apparatus (10) as claimed in one of the preceding claims, **characterized in that**, when the connecting cable (46) is shortcircuited, the potential at the positive input of the first comparator (18) is less than at the negative input and the potential at the positive input of the second comparator (20) is greater than at the negative input.

7. Gardening machine switching apparatus according to one of the preceding claims, **characterized in that** the first comparator (18) of the comparison circuit unit (16) is intended to switch on when there is a short circuit.

8. Gardening machine switching apparatus according to one of the preceding claims, **characterized in that** the further comparator (20) of the comparison circuit unit (16) is intended to switch on in an open state of the switch (14) and/or when a connection is interrupted.

9. Gardening machine switching apparatus according to one of the preceding claims, **characterized in that** the first comparator (18) and the further comparator (20) of the comparison circuit unit (16) are intended to switch off in a closed state of the switch (14).

10. Gardening machine switching apparatus according to one of the preceding claims, **characterized in that** the at least one switch (14) is designed such that it is at least partially mechanical and can be operated by an operator.

11. Gardening machine switching apparatus according to Claim 10, **characterized in that** the at least one switch (14) is in the form of a microswitch.

12. Gardening machine, in particular lawnmower, comprising at least one gardening machine switching apparatus (10) according to one of the preceding claims.

## Revendications

1. Dispositif de commutation de machine de traitement du jardin (10) pour mettre en service une unité à moteur électrique (12) d'une machine de traitement de jardin (26), avec au moins un commutateur (14), qui est relié électriquement par un câble de liaison (46) à une unité de commutation à comparaison (16), **caractérisé par** au moins une première résistance électrique (R1, 22), qui est disposée ensemble avec le commutateur (14) dans un boîtier de commutateur (70) et est connectée en série avec le commutateur (14) de telle manière qu'elle forme au moins avec une autre résistance électrique (R2, 24) disposée dans l'unité de commutation à comparaison (16), un diviseur de tension, dont la prise médiane est électriquement reliée à l'entrée négative d'un premier comparateur (18) et à l'entrée positive d'un deuxième comparateur (20) pour différencier entre un état fermé du commutateur (14), un état ouvert du commutateur (14) et un court-circuit du câble de liaison (46).

2. Dispositif de commutation de machine de traitement du jardin (10) selon la revendication 1, **caractérisé par** deux autres diviseurs de tension (R3, R4+R5 ; R3+R4, R5), qui sont respectivement reliés à l'entrée positive du premier comparateur (18) et à l'entrée négative du deuxième comparateur (20).

3. Dispositif de commutation de machine de traitement du jardin selon la revendication 2, **caractérisé en ce que** les résistances (R1 à R5) présentent toutes pour l'essentiel la même valeur de résistance.

4. Dispositif de commutation de machine de traitement du jardin (10) selon l'une quelconque des revendications précédentes, **caractérisé en ce qu'**avec le commutateur (14) fermé, le potentiel aux entrées positives du premier et du deuxième comparateur (18, 20) est supérieur à celui des entrées négatives.

5. Dispositif de commutation de machine de traitement du jardin (10) selon l'une quelconque des revendications précédentes, **caractérisé en ce qu'**avec le commutateur (14) ouvert, le potentiel à l'entrée positive du premier comparateur (18) est supérieur à celui de l'entrée négative et le potentiel à l'entrée positive du deuxième comparateur (20) est inférieur à celui de l'entrée négative.

6. Dispositif de commutation de machine de traitement du jardin (10) selon l'une quelconque des revendications précédentes, **caractérisé en ce qu'**en cas de court-circuit du câble de liaison (46), le potentiel à l'entrée positive du premier comparateur (18) est inférieur à celui de l'entrée négative et le potentiel à l'entrée positive du deuxième comparateur (20) est supérieur à celui de l'entrée négative.

7. Dispositif de commutation de machine de traitement du jardin selon l'une quelconque des revendications précédentes, **caractérisé en ce que** le premier comparateur (18) de l'unité de commutation à comparaison (16) est prévu pour mettre en connexion en cas de court-circuit.

8. Dispositif de commutation de machine de traitement du jardin selon l'une quelconque des revendications précédentes, **caractérisé en ce que** l'autre comparateur (20) de l'unité de commutation à comparaison (16) est prévu pour mettre en connexion dans un état ouvert du commutateur (14) et/ou en cas d'une interruption d'une liaison.

9. Dispositif de commutation de machine de traitement du jardin selon l'une quelconque des revendications précédentes, **caractérisé en ce que** le premier comparateur (18) et l'autre comparateur (20) de l'unité de commutation à comparaison (16) sont prévus pour bloquer dans un état fermé du commutateur (14).

10. Dispositif de commutation de machine de traitement du jardin selon l'une quelconque des revendications précédentes, **caractérisé en ce qu'**au moins un commutateur (14) est constitué au moins en partie de façon mécanique et pouvant être actionné par un opérateur.

11. Dispositif de commutation de machine de traitement du jardin selon la revendication 10, **caractérisé en ce qu'**au moins un commutateur (14) est constitué comme un microrupteur.

12. Machine de traitement du jardin, en particulier tondeuse à gazon, avec au moins un dispositif de commutation de machine de traitement du jardin (10) selon l'une quelconque des revendications précédentes.
